# DEMANDE DE BREVET EUROPEEN

(11) **EP 1 830 076 A1**
(43) Date de publication de la demande: **05.09.2007**
(21) Numéro de dépôt: 07300834.4
(22) Date de dépôt: 28.02.2007
(51) Int. Cl.: F16B 21/08, B60R 16/02

(54) **Pion de fixation et assemblage comprenant un tel pion**

(30) Priorité: 01.03.2006 FR 0601834
(71) Demandeur: Renault SAS, 92100 Boulogne Billancourt (FR)
(72) Inventeur: Carmona, Pedro, 78180 Montigny-le-Bretonneux (FR); Saubion, Mathieu, 78180 Montigny-le-Bretonneux (FR)

(57) **Abrégé**

L'invention concerne un pion de fixation susceptible d'être fixé sur un élément support, ce pion (1) présentant un axe (25) général où se situe, vers une extrémité axiale, une partie d'engagement en ogive (13), déformable, et, vers une extrémité axiale opposée, une tête élargie (21). L'invention concerne également l'assemblage dudit pion sur un support.

## Description

L'invention concerne un pion de fixation de préférence en plastique, adapté en particulier à constituer un pion imperdable pour fixer une pièce sur un trou taraudé, avec possibilité de montage et démontage manuel, ou à l'aide d'un outil à main.

On connaît nombre de pions de fixation, y compris des pions imperdables, monoblocs, comme notamment visés ici.

On cherche toutefois encore, dans la présente demande, un pion présentant tout ou partie des avantages suivants, et de préférence au moins la plupart d'entre eux :
- peu cher,
- facile à fabriquer, en grande série,
- facile à monter et/ou démonter,
- manoeuvrable aux doigts, voire avec différents types d'outil à main-courant,
- pratique d'emploi,
- susceptible d'être en particulier utilisable sur un carter de boîte, spécifiquement un carter d'embrayage,
- susceptible d'être monté sur un élément de maintien pourvu d'une goulotte adaptée pour supporter une partie de câblage électrique.

Dans ce but, il est en espèce proposé un pion de fixation, de préférence en plastique, susceptible d'être donc fixé sur un élément support pourvu d'une goulotte supportant, ou adaptée pour supporter, une partie de câblage électrique, ledit pion étant destiné à être lui-même fixé sur une structure support d'un véhicule, pour y maintenir la partie de câblage électrique et l'élément de maintien avec sa goulotte, ce pion présentant pour cela un axe général où se situe, vers une extrémité axiale, une partie d'engagement en ogive, déformable, et, vers une extrémité axiale opposée, une tête élargie.

De préférence,
- le pion sera monobloc,
- et/ou la partie d'engagement en ogive déformable sera définie par au moins deux ailes réunies vers ladite extrémité, du côté de la pointe de l'ogive, d'où s'étendra, entre elles, un fût axial prolongé, vers l'extrémité axiale opposée, par la tête élargie,
- et/ou cette tête élargie sera une tête de manoeuvre en ce qu'y sont formées plusieurs conformations différentes adaptées pour permettre la manoeuvre dudit pion par plusieurs parmi les outils, ou moyens de manoeuvre suivants : doigt(s) d'un utilisateur, tournevis, clé plate, clé à tube, objet pointu, outil pouvant constituer une poignée d'entraînement en rotation du pion ou un levier d'arrachement dudit pion.

Avantageusement, chaque conformation sera spécifiquement définie pour favoriser la manoeuvre du pion par l'un des outils ou des moyens de manoeuvre précités.

Pour la manoeuvre de montage et/ou démontage, on conseille par ailleurs que le pion comprenne plusieurs, et de préférence plus de trois, des dites conformations suivantes :
- un plat sur une face transversale de sa tête, pour une manoeuvre favorable de poussée par un doigt sur le pion,
- au moins une fente dans la face transversale de l'extrémité de sa tête, pour un engagement favorable d'un tournevis,
- au moins un renfoncement dans une paroi latérale que présente la tête, pour y engager l'outil adapté à constituer une poignée d'entraînement en rotation du pion autour de son axe ou levier d'arrachement de ce pion,
- des pans latéraux multiples sur la tête du pion, pour y placer une clé plate ou à tube, permettant d'entraîner en rotation le pion autour de son axe.

Favorablement, la tête du pion présentera latéralement plusieurs pans pour y engager l'outil adapté à constituer poignée d'entraînement en rotation du pion autour de son axe ou levier d'arrachement de ce pion, la tête dudit pion étant de préférence hexagonale.

Quant à l'ogive d'engagement, elle sera avantageusement filetée de préférence à l'endroit des dites ailes, pour coopérer avec un trou taraudé.

Outre un pion, en soi, est également ici visé un assemblage comprenant un dit pion de fixation pouvant être monté et/ou démonté manuellement et/ou avec un outil à main, ce pion étant monté sur un élément de maintien comportant une goulotte supportant, ou adaptée pour supporter, une partie de câblage électrique et destiné à être lui-même fixé sur une structure support d'un véhicule, pour y maintenir ledit élément de maintien avec sa goulotte et la partie de câblage électrique, le pion présentant, vers une première extrémité, une partie d'engagement en ogive, déformable, et, vers une seconde extrémité, une tête élargie.

De préférence, l'élément support pourvu de la goulotte sera fixé sur la structure support du véhicule qui sera un carter d'embrayage.

Une application en grande série, favorisant le montage d'organes encombrants et délicats à manier, tels que des faisceaux électriques, est ainsi particulièrement prise en compte.

A cet égard, on tirera a priori avantageusement partie d'une réalisation dans laquelle :
- la partie d'engagement du pion sera pourvue d'une portion de filetage,
- la structure support du véhicule comprendra un trou taraudé,
- et, pour fixer l'élément support pourvu de la goulotte sur cette structure support du véhicule, les filets du pion seront engagés dans le taraudage de la structure support du véhicule, sous contrainte.

La prévision d'une tête de manoeuvre reprenant tout ou partie des caractéristiques précitées à cet égard favorisera par ailleurs l'aisance d'emploi et le caractère pratique du pion.

Favorablement, l'assemblage entre les pions et l'élément de maintien sera réalisé par assemblage à force, la tête élargie du pion étant alors favorablement une tête de manoeuvre, pour son montage et/ou son démontage vis-à-vis de ladite structure support du véhicule, cette tête de manoeuvre comprenant pour cela plusieurs conformations différentes adaptées pour permettre la manoeuvre dudit pion par plusieurs parmi les outils ou moyens de manoeuvre suivants : doigt(s) d'un utilisateur, tournevis, clé plate, clé à tube, objet pointu, outil pouvant constituer une poignée d'entraînement en rotation du pion ou un levier d'arrachement dudit pion.

Par souci d'informations encore plus détaillées, on va maintenant fournir des détails complémentaires de réalisation, à titre d'exemple non limitatif et en relation avec des dessins fournis également uniquement à titre illustratif et dans lesquels :
- la figure 1 est un schéma global de possible montage d'un faisceau de câbles sur une goulotte,
- la figure 2 correspond à l'agrandissement de la zone II de la figure 1 et schématise un assemblage avec un carter d'embrayage,
- la figure 3 montre un pion, seul,
- la figure 4 est la vue de ce pion, selon la flèche III.

Ci-après, on présente donc l'utilisation d'au moins un pion 1 dans le cadre du montage, voire du démontage, manuel ou à l'aide d'un outil à main, d'un faisceau câblé 3 comprenant en particulier une série de câbles électriques, tels que 3a, 3b, 3c...etc.

Toutefois, d'autres applications du pion 1 peuvent être réalisées au vu ne serait ce que de l'emploi actuel de petits pions plastique dits « imperdables ».

Les câbles 3a, 3b...etc. sont réunis en un toron 30 placé dans une goulotte 5.

La goulotte 5, en forme de rigole ouverte, à section par exemple sensiblement en U ou en C, appartient à un élément de maintien 7 destiné à porter et à maintenir le toron 30 vis-à-vis d'une structure support, ici le carter d'embrayage 9 d'un véhicule automobile.

L'élément de maintien 7 est en plastique et présente globalement une forme de plaque.

Il est prévu pour être fixé à la structure 9, par une ou plusieurs vis telles que 11a et par le/chaque pion 1.

Le pion 1, pré-monté sur l'élément de maintien 7, va de surcroît servir à positionner celui-ci sur la structure support 9 et à faciliter sa fixation définitive, via la/les vis telles que 11a.

Pour son montage pratique, le pion 1 présente, vers une première extrémité, une partie d'engagement 13 en forme d'ogive s'évasant depuis cette extrémité en direction de l'extrémité axiale opposée.

La partie d'engagement 13 présente elle-même, extérieurement, un filetage 15 adapté pour engager un taraudage 17 ménagé à l'endroit d'un orifice 19 de la structure support 9.

A cette seconde extrémité, le pion 1 est pourvu d'une tête élargie 21, de sorte qu'une fois engagé à force suivant l'axe 25 du pion, et à travers l'orifice 23 de l'élément de maintien 7, le pion 1 est bloqué entre son ogive 13 et sa tête élargie 21.

L'engagement du pion 1 à travers l'orifice 23 s'opère par déformation élastique de la forme en ogive 13, radialement par rapport à l'axe 25 qui est donc aussi l'axe d'allongement du pion.

Pour cet engagement, la forme en ogive est ici fendue en deux endroits, sur sa longueur. Elle est ainsi réalisée avec deux pattes ou ailes diamétralement opposées 25a, 25b porteuses extérieurement des portions filetées 15 et réunies uniquement vers la pointe de l'ogive, à la première extrémité la du pion, sur l'axe 25. De là s'étend vers la seconde extrémité, et jusqu'à la tête élargie 21, un fût axial et central 27. Les filetages 15 coopèrent avec le trou taraudé 19.

Le pion 1 est ici monobloc, en plastique relativement dur. Sa tête 21 est élargie, radialement à l'axe 25. Elle présente une section beaucoup plus importante que le fût 27. Le long de l'axe 25, juste avant elle, on trouve favorablement une collerette d'arrêt 29 en forme de disque bombé. La section (radialement à l'axe 25) de la collerette 29 et/ou de la tête élargie 21 est/sont notablement plus importante(s) que celle de l'ogive 13 à son endroit le plus évasé.

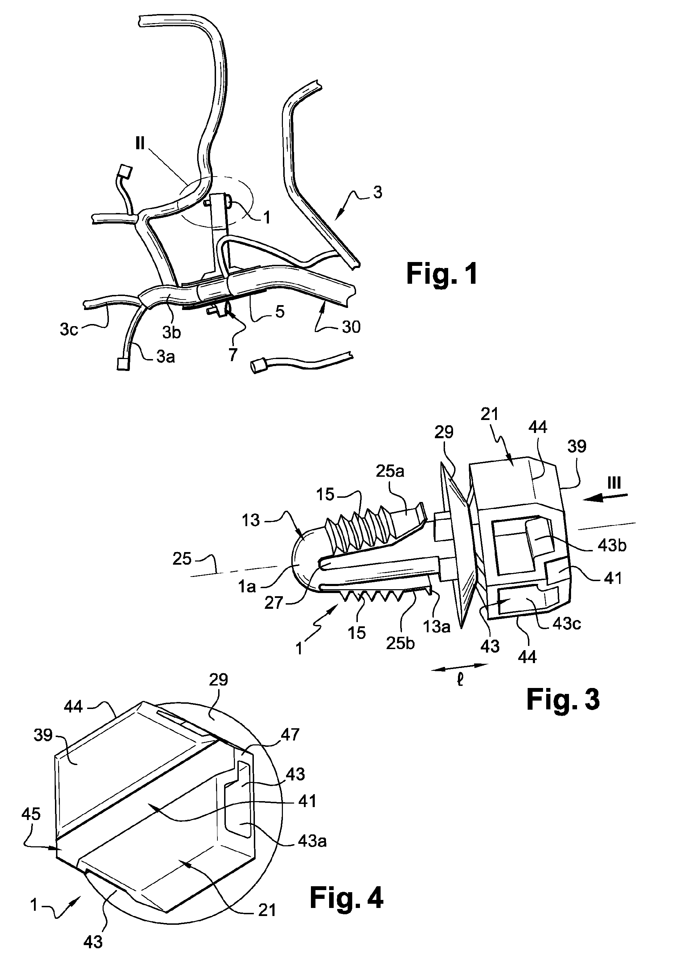

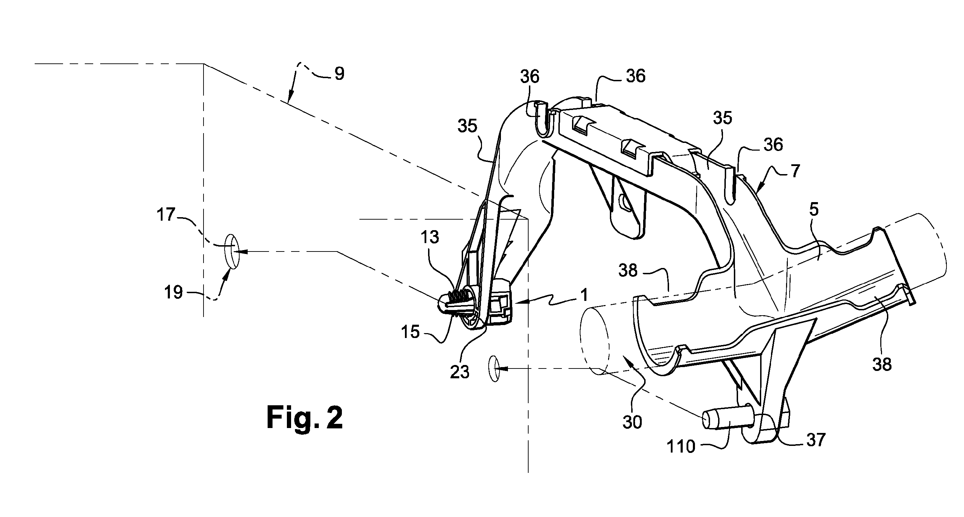

En ayant adapté la longueur axiale 1 (figure 3) du fût entre l'extrémité libre de plus grande section de l'ogive 13 (en 13a) et, soit la tête élargie 21, soit la collerette 29, et en ayant également adapté l'épaisseur de l'élément de maintien 7 à l'endroit de son orifice 23, le pion 1 va être axialement bloqué vis-à-vis de cet orifice, une fois introduit là.

Pour jouer son rôle de maintien de câblage(s), l'élément de maintien 7 pourra comprendre une ou plusieurs goulottes où seront placés un ou plusieurs câbles.

Figure 2, on voit essentiellement deux goulottes : 5 et 35.

Elles peuvent être individuellement fermées par un couvercle pour éviter au(x) câble(s) de s'en dégager inopinément.

La goulotte 35 définit une arche à une extrémité et c'est transversalement à elle que s'étend la goulotte 5.

La goulotte 35 et l'axe 25 du pion sont transversaux.

Des encoches 36, 38 dans la paroi latérale des goulottes assurent un passage pour les câbles, si nécessaire.

Le pion 1 est situé à une extrémité de la goulotte 35, la goulotte 5 et la vis 11a à l'autre.

La vis 11 est engagée à travers un orifice 37 située sous la goulotte 5 et parallèle à elle.

Ainsi, les goulottes sont soutenues par le pion 1 et la/les vis telle (s) que 11, une fois engagé (e) s dans leurs orifices récepteurs de la structure support.

La tête élargie 21 du pion 1 sert à sa manoeuvre.

Tel qu'illustré, elle comprend plusieurs conformations différentes, 39, 41, 43, 44, adaptées pour permettre la manoeuvre dudit pion par plusieurs parmi des outils ou moyens de manoeuvre suivants : doigt(s) d'un utilisateur, tournevis, clé plate, clé à tube, objet pointu, outil pouvant constituer une poignée d'entraînement en rotation du pion ou un levier d'arrachement de ce pion.

Figures 3 et/ou 4, ces conformations sont les suivantes :
- un large plat 39 sur la face transversale extérieure 45 de sa tête, pour une manoeuvre favorable de poussée par un doigt sur le pion,
- au moins une fente 41 dans cette face transversale 45 de la tête, pour un engagement favorable d'un tournevis,
- au moins un renfoncement 43 dans une paroi latérale 47 que présente la tête, pour y engager l'outil adapté à constituer une poignée d'entraînement en rotation du pion 1 autour de son axe ou un levier d'arrachement de ce pion,
- des pans latéraux multiples 44 sur les côtés de la tête du pion, pour y placer une clé plate ou à tube, permettant d'entraîner en rotation le pion autour de son axe 25.

La tête 21 du pion est polygonale, de préférence hexagonale. A l'endroit de plusieurs de ces pans, ici de quatre (deux à deux adjacents) de ses six pans, la tête 21 présente latéralement un renfoncement 43 pour y engager l'outil précité adapté à constituer la poignée d'entraînement en rotation du pion autour de son axe 25 ou le levier d'arrachement de ce pion. Il s'agit de cavités dont les parois, telles que 43a, 43b, 43c peuvent servir d'appui audit outil, une fois celui-ci engagé là, transversalement à l'axe 25.

## Revendications

1. Pion de fixation susceptible d'être fixé sur un élément support, ce pion (1) présentant un axe (25) général où se situe, vers une extrémité axiale, une partie d'engagement en ogive (13), déformable, et, vers une extrémité axiale opposée, une tête élargie (21).

2. Pion (1) selon la revendication 1, **caractérisé en ce que** :
- il est monobloc,
- et/ou la partie d'engagement (13) en ogive déformable est définie par au moins deux ailes réunies vers ladite extrémité, du côté de la pointe de l'ogive (13), d'où s'étend, entre elles, un fût (27) axial prolongé, vers l'extrémité axiale opposée, par la tête élargie (21),
- et/ou cette tête élargie (21) est une tête de manoeuvre **en ce qu'**y sont formées plusieurs conformations différentes adaptées pour permettre la manoeuvre dudit pion (1) par des outils ou des moyens de manoeuvre.

3. Pion (1) selon la revendication 2, **caractérisé en ce que** chaque conformation (39,41,43,44) est spécifiquement définie pour favoriser la manoeuvre du pion (1) par l'un des outils ou des moyens de manoeuvre de cette revendication 7.

4. Pion (1) selon la revendication 2 ou la revendication 3, **caractérisé en ce qu'**il comprend plusieurs, et de préférence plus de trois, des dites conformations suivantes :
- un plat (39) sur une face transversale de sa tête (21), pour une manoeuvre favorable de poussée, par exemple, par un doigt sur le pion (1),
- au moins une fente (41) dans la face transversale (45) de l'extrémité de sa tête (21), pour un engagement favorable, par exemple, d'un tournevis,
- au moins un renfoncement (43) dans une paroi latérale que présente la tête, pour y engager l'outil adapté à constituer une poignée d'entraînement en rotation du pion (1) autour de son axe (25) ou levier d'arrachement de ce pion,
- des pans latéraux multiples sur la tête du pion (1), pour y placer, par exemple, une clé plate ou à tube, permettant d'entraîner en rotation le pion (1) autour de son axe (25).

5. Pion (1) selon l'une quelconque des revendications précédentes, **caractérisé en ce que** la tête (21) du pion (1) présente latéralement plusieurs pans pour y engager l'outil adapté à constituer une poignée d'entraînement en rotation du pion (1) autour de son axe (25) ou levier d'arrachement de ce pion.

6. Pion (1) selon la revendication 4 ou 5, **caractérisé en ce que** la tête (21) du pion (1) est hexagonale.

7. Pion (1) selon l'une quelconque des revendications 4 à 6, **caractérisé en ce qu'**à l'endroit de plusieurs pans, ou de tous les pans, la tête (21) présente latéralement un renfoncement (43) pour y engager l'outil adapté à constituer poignée d'entraînement en rotation du pion (1) autour de son axe (25) ou levier d'arrachement de ce pion (1).

8. Pion (1) selon la revendication 2 ou l'une des revendications 3 à 7 se rattachant à la revendication 2, **caractérisé en ce que** les ailes de l'ogive (13) sont extérieurement filetées (15) pour coopérer avec un trou taraudé (17).

9. Assemblage comprenant un pion (1) de fixation, ce pion (1) étant monté sur un élément de maintien (7) destiné à être en outre fixé sur une structure (9) support, pour y maintenir ledit élément de maintien (7), le pion (1) présentant pour cela, vers une première extrémité, une partie d'engagement en ogive (13), déformable, et, vers une seconde extrémité, une tête élargie (21).

10. Assemblage selon la revendication 9, **caractérisé en ce que** :
- ladite partie d'engagement (13) du pion (1) est pourvue d'une portion de filetage (15),
- la structure support (9) comprend un trou taraudé (17,19),
- et, pour fixer l'élément support sur cette structure support (9), les filets du pion sont engagés dans le taraudage (17) de la structure support (9), sous contrainte.

11. Assemblage selon l'une quelconque des revendications 9 ou 10, **caractérisé en ce que** la tête élargie (21) du pion est une tête de manoeuvre, pour son montage et/ou son démontage vis-à-vis de ladite structure support (9), cette tête de manoeuvre comprenant pour cela plusieurs conformations différentes adaptées pour permettre la manoeuvre dudit pion (1) par des outils ou des moyens de manoeuvre.

12. Assemblage selon l'une quelconque des revendications 9 à 11, **caractérisé en ce que** le pion (1) est assemblé avec l'élément de maintien (7) par engagement forcé de sa partie d'engagement (13) à travers un orifice (23) de cet élément de maintien (7), jusqu'à butée contre une collerette (29) d'arrêt.

13. Assemblage selon l'une des revendications 9 à 12, **caractérisé en ce que** l'élément de maintien (7) comporte une goulotte (5) apte à supporter une partie de câblage électrique et étant destiné à être fixé sur une structure (9) support d'un véhicule, pour y maintenir ledit élément de maintien (7) avec sa goulotte (5) et la partie de câblage électrique.

14. Assemblage selon l'une des revendications 9 à 13, **caractérisé en ce que** l'élément support pourvu de la goulotte (5) est fixé sur la structure (9) support du véhicule qui est un carter d'embrayage.
